# FASCICULE DE BREVET EUROPEEN

(11) **EP 0 838 031 B1**
(45) Date de publication et mention de la délivrance du brevet: **06.11.2002**
(21) Numéro de dépôt: 96924910.1
(22) Date de dépôt: 02.07.1996
(51) Int. Cl.: G01N 27/82

(54) **PROCEDE ET DISPOSITIF DE CONTROLE MAGNETIQUE DE PRODUITS DONT LA PAROI COMPORTE AU MOINS UNE COUCHE EN MATERIAU MAGNETIQUE**
VERFAHREN UND VORRICHTUNG ZUR MAGNETISCHEN KONTROLLE VON PRODUKTEN, DEREN WAND ZUMINDEST EINE MAGNETISCHE SCHICHT AUFWEIST
METHOD AND DEVICE FOR MAGNETICALLY TESTING PRODUCTS WITH A WALL COMPRISING AT LEAST ONE LAYER OF MAGNETIC MATERIAL

(30) Priorité: 10.07.1995 FR 9508635
(43) Date de publication de la demande: 29.04.1998
(73) Titulaire: COFLEXIP, 92973 Paris La Defense (FR)
(72) Inventeur: CRESCENZO, Eric, F-71590 Gergy (FR); LEMBEYE, Philippe, F-76000 Rouen (FR)
(74) Mandataire: Levy, David
(86) Numéro de dépôt international: FR9601018
(87) Numéro de publication internationale: WO97003353

(56) Documents cités:
- GB-A- 2 193 810
- US-A- 5 336 998
- US-A- 5 359 939

## Description

La présente invention concerne de manière générale le contrôle magnétique d'objets ou produits formant ou comportant une paroi comprenant au moins une couche en matériau magnétique, en particulier de l'acier, en vue de la détection de défauts, tels que des fissures, dans de tels produits.

Ce type de contrôle entre dans la catégorie des contrôles non destructifs, pour lesquels on connaît déjà les contrôles par mesure du flux de fuite ou flux de dispersion, et les contrôles dits par Courants de Foucault, utilisés notamment pour la détection de défauts dans des produits sidérurgiques.

La présente invention vise particulièrement le contrôle de produits allongés, de grande longueur, dont la couche à contrôler n'est pas directement accessible aux appareillages de contrôle, ou dont les défauts à détecter sont situés dans l'épaisseur de la paroi du produit, à une distance relativement importante de la surface de cette paroi accessible aux appareillages de contrôle. De tels produits peuvent être de section générale pleine, tels que des câbles, notamment revêtus d'une ou plusieurs gaines de protection ou de renforcement, dont l'inspection est effectuée par l'extérieur, ou de section évidée, tels que tubes, canalisations, flexibles, etc., dont l'inspection peut être effectuée par l'extérieur ou par l'intérieur. Il est précisé que par l'expression "produits de grande longueur", on doit comprendre tout produit allongé dont la longueur est telle qu'il n'est pratiquement pas possible d'accéder simultanément à ses deux extrémités pour procéder à une magnétisation globale du produit sans déplacement des moyens de magnétisation, ou que la puissance nécessaire pour effectuer une telle magnétisation globale serait trop importante pour être réalisée industriellement.

La présente invention vise notamment le contrôle de produits tubulaires, rigides ou non, pour lesquels le contrôle doit être effectué par l'intérieur du produit. Un tel contrôle effectué par l'intérieur s'avère nécessaire notamment pour des conduits sensiblement rigides ou flexibles, tels que les tuyauteries ou canalisations utilisés dans l'industrie de la protection de pétrole offshore. En effet, le contrôle in situ de tels conduits par l'extérieur est souvent rendu pratiquement impossible du fait de leur environnement. Par exemple les canalisations semi-rigides ou les flexibles utilisés pour transporter le pétrole d'une tête de puits située au fond de la mer jusqu'à une plate-forme de forage en surface sont couramment équipés de moyens de connexion à leurs extrémités et de moyens de soutien intermédiaires, tels que des flotteurs, qui empêchent toute accessibilité par l'extérieur. Or ce sont ce sont justement ces zones de connexion ou de soutien qui sont soumises aux plus fortes contraintes, et donc au plus fort risque d'apparition de fissures, criques ou ruptures. C'est par ailleurs dans ces zones à fortes contraintes que d'autres défauts, tels que piqûres ou corrosion, peuvent entraîner les plus grands risques de fissurations et de diminution de la résistance mécanique des canalisations. Mais ces canalisations comportent classiquement au moins une couche interne d'étanchéité ou un revêtement interne de protection qui rendent directement inaccessible la couche magnétique à contrôler.

Bien que l'invention soit d'application générale à tous produits comportant au moins une couche en matériau ferromagnétique, elle trouve son intérêt pour des produits dont la structure empêche ou complique la mise en oeuvre des méthodes de contrôle classiques. Elle vise particulièrement à permettre le contrôle des canalisations rigides, semi-rigides ou flexibles utilisés dans l'industrie du pétrole, qui seront prises par la suite comme exemple type d'application du procédé et du dispositif selon l'invention.

Les canalisations rigides ou semi-rigides utilisées pour le transport du pétrole sont généralement constituées d'un tube en acier ayant une épaisseur de paroi relativement importante, et souvent revêtu intérieurement d'une couche d'un matériau synthétique polymère, par exemple du polyéthylène, de plusieurs millimètres d'épaisseur. En outre, on constate une tendance à utiliser des tubes d'acier d'épaisseur de plus en plus importante, pouvant atteindre ou dépasser 30 mm et même 40 mm, ce qui augmente la difficulté des contrôles.

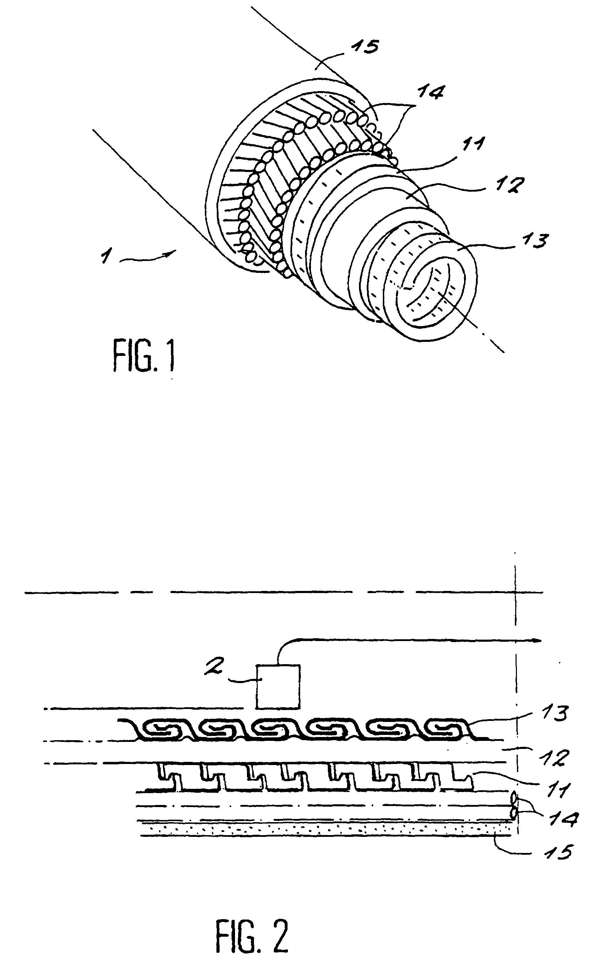

Les canalisations flexibles ont une structure plus complexe, leur paroi étant formée de plusieurs couches superposées destinées à assurer d'une part l'étanchéité et d'autre part la résistance mécanique, tant dans la direction axiale du flexible que dans sa direction radiale ou circonférentielle. Ces flexibles, tel que celui représenté à titre d'exemple à la figure 1 des dessins annexés, comportent notamment une voûte de pression 11 constituée d'au moins un fil métallique, par exemple en acier au carbone ferromagnétique, spiralé avec un pas court, et qui a pour fonction de supporter la composante circonférentielle des efforts de pression interne exercés par le pétrole, et une gaine plastique 12, en matériau polymère, amagnétique et non conducteur, placée à l'intérieur de la voûte de pression et s'appuyant sur celle-ci, pour assurer l'étanchéité du flexible. L'épaisseur de la gaine est en général de l'ordre de 5 à 10 mm mais peut atteindre 20 mm.

La voûte peut être formée d'un seul fil spiralé, ayant un profil spécial, par exemple tel que connu sous le nom de profil zêta et décrit dans FR-A-2182372, adapté pour permettre l'auto-agrafage des spires successives tout en laissant une petite liberté de mouvement entre deux spires successives pour assurer la flexibilité de la canalisation. La voûte peut également être formée de deux nappes de fils, une spire de fil d'une nappe s'imbriquant avec deux spires adjacentes de l'autre nappe. Les deux nappes peuvent ainsi être formées avec des fils de profil en "U", inversés d'une nappe à l'autre, comme décrit dans US-A-4549581, ou, de manière similaire, à partir de fils de section en "T", comme décrit dans EP-A-431142, ou encore une nappe formée de fils de section en "T" et l'autre formée de fils de section en "U", comme décrit également dans EP-A-431142.

L'épaisseur de cette voûte varie en fonction notamment du diamètre du flexible et du profil des fils utilisés, de quelques millimètres à plus de 15 mm.

Généralement, une carcasse interne 13, formée d'un feuillard profilé, agrafé et spiralé avec un pas court, est située à l'intérieur de la gaine plastique, pour supporter les éventuels efforts d'écrasement du flexible et soutenir la gaine plastique pour éviter l'affaissement de celle-ci vers l'intérieur en cas de diminution de la pression à l'intérieur du flexible. Cette carcasse, dont l'épaisseur totale peut varier de quelques millimètres à 15 mm ou plus, est couramment réalisée par un feuillard en acier inoxydable austénitique, tel que les nuances 316/316L ou 304/304L, qui est amagnétique ou légèrement magnétique.

Par ailleurs, des nappes d'armures 14, constituées de fils d'acier spiralées avec un pas long, entourent la voûte de pression et sont destinées essentiellement à supporter les efforts axiaux de traction, générés par la pression interne, le poids propre du flexible et du pétrole qu'il contient, etc. Ces fils d'armure peuvent avoir différentes formes de section, par exemple des sections généralement arrondies ou rectangulaires, auquel cas les fils sont simplement disposés les uns à coté des autres dans la nappe ; ou des sections de type agrafable, telles que section de type zêta, en "U" ou en "T", similaires aux fils de voûte décrits ci-dessus, et connus notamment par EP-A-489896. Une gaine externe 15 en matériau thermoplastique protège la voûte de pression et les nappes d'armures contre la corrosion.

Ces flexibles peuvent aussi avoir une structure un peu plus simple, la ou les nappes d'armures assurant également la résistance aux efforts circonférentiels de pression interne et remplaçant alors la couche de voûte de pression, ou inversement une structure plus complexe, par exemple avec une nappe de fil spiralé à pas court et agrafé, de manière similaire à la voûte précédemment décrite, placée autour de la ou des nappes d'armures, comme décrit notamment dans EP-A-147288 et US-A-4867205.

Comme on l'aura compris, la structure de ces flexibles est complexe, et l'existence de plusieurs couches de matériaux et formes différents en rend le contrôle particulièrement difficile.

Des problèmes similaires se posent pour le contrôle d'autres produits de structure complexe, tels que des câbles et notamment les câbles ou tirants utilisés pour l'ancrage vertical des plate-forme pétrolières à flottabilité positive, qui comportent notamment une gaine externe en matériau polymère et/ou une ou plusieurs couches, entourant le câble proprement dit, en matériau métallique amagnétique, faiblement magnétique ou même notablement magnétique.

Dans les différents types de contrôles magnétiques connus, les contrôles par Courants de Foucault, utilisables pour les matériaux électro-conducteurs, consistent à générer dans le produit contrôlé des Courants de Foucault qui génèrent à leur tour un champ magnétique réactif variable, lequel influe sur l'impédance d'une bobine réceptrice placée à proximité de la surface du produit. En présence d'un défaut dans le produit contrôlé, la circulation des Courants de Foucault est perturbée par ce défaut, ce qui provoque des variations du champ réactif et donc de l'impédance de la bobine réceptrice. La mesure de l'impédance permet donc de détecter la présence de défauts dans le produit.

Dans le cas des canalisations précitées, cette technique n'est toutefois pas satisfaisante. En effet, dans le cas des canalisations rigides ou semi-rigides revêtues intérieurement, l'épaisseur de la ou des couches internes de revêtement conduit à ce que le capteur comportant les bobines émettrices et réceptrices est éloigné de la paroi métallique à contrôler. Bien que le revêtement interne soit non conducteur, cet éloignement conduit à une réduction de sensibilité encore plus pénalisante lorsque l'on souhaite détecter des défauts qui ne débouchent pas directement à la surface interne de la paroi métallique ( par exemple des inclusions).

A ces inconvénients s'ajoutent, dans le cas des flexibles, par exemple pour le contrôle de la voûte de pression, les problèmes dûs à la nature de cette couche et à la présence de la carcasse interne. Le fait que la couche à contrôler soit formée d'un ou plusieurs fils spiralés est néfaste pour un contrôle par la technique des courants de Foucault qui, comme on le sait, est perturbée par des états de surface irréguliers du produit à contrôler. Par ailleurs, la présence de la carcasse interne accroît encore la distance entre le capteur et la couche à contrôler.

De plus, même si le matériau constitutif de la carcasse est amagnétique ou seulement légèrement magnétique, celle-ci est électriquement conductrice. Si l'épaisseur de cette couche conductrice devient supérieure à quelques millimètres, la sensibilité de détection des défauts situés dans la couche magnétique à inspecter décroît brutalement, de manière quasi-exponentielle en fonction de l'épaisseur de la couche intermédiaire conductrice, du fait de l'effet de peau.

Pour limiter l'effet de peau des courants de Foucault et assurer une pénétration suffisante de ces courants dans la couche de pression à travers la carcasse, il serait nécessaire de travailler à basse fréquence, par exemple moins de 1000 Hz, ou bien en excitation pulsée avec des pulses larges et de forte intensité. Pour compenser la baisse de sensibilité due à l'utilisation d'une fréquence basse, il serait nécessaire d'utiliser des bobines détectrices comportant un grand nombre de spires, donc plus volumineuses, et il en résulterait une diminution de la résolution spatiale, néfaste pour la détection de défauts de faibles dimensions et pour la discrimination entre deux défauts voisins. D'autre part, une excitation pulsée de forte intensité nécessite de dimensionner plus largement les bobines d'excitation.

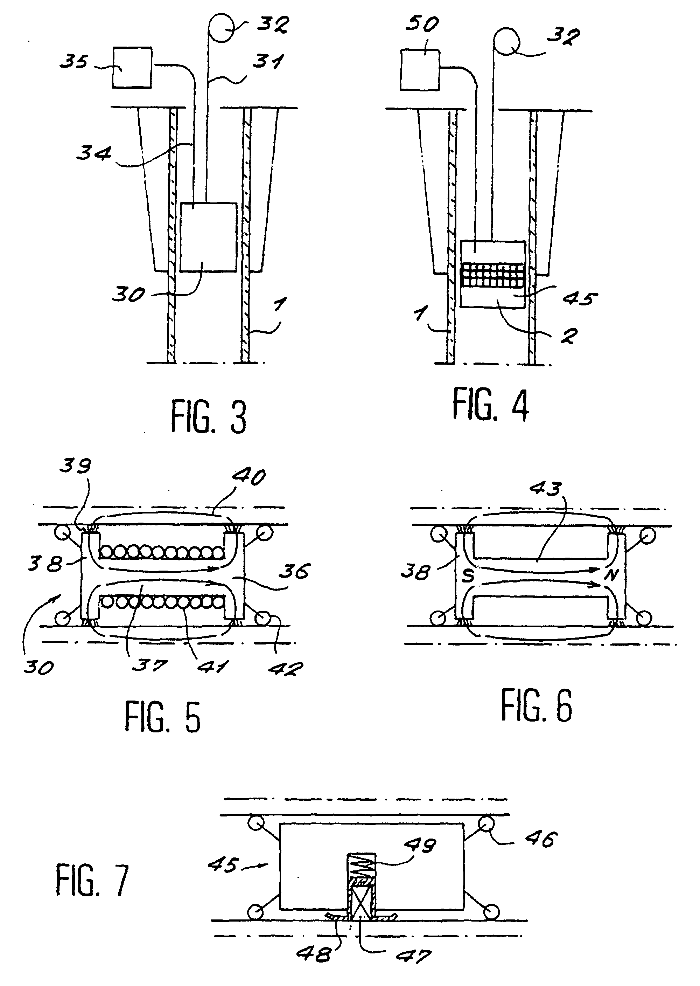

Un inconvénient supplémentaire pour l'utilisation de la technique de contrôle par courants de Foucault provient de la structure spécifique de la couche formant la carcasse, visible à la figure 2. En effet, des signaux perturbateurs sont inévitablement générés par les courants de Foucault créés dans la carcasse conductrice, du fait de l'effet de peau. Même si leur amplitude peut plus ou moins être amoindrie par rapport aux signaux de défauts issus de la couche à contrôler en travaillant à basse fréquence, ces signaux constituent une part majeure du signal global perçu par le capteur, et ceci d'autant plus que la couche intermédiaire formée par la carcasse, située entre le capteur et la couche à contrôler, présente une géométrie complexe, source de tels signaux perturbateurs. Il s'ensuit que ces signaux perturbateurs provenant de la carcasse peuvent perturber ou masquer les signaux de défauts de la couche de pression, empêchant tout contrôle valable de cette dernière. Un traitement courants de Foucault multi-fréquence permet à priori de filtrer le signal perturbateur issu d'une carcasse interne, mais un tel traitement n'est pas opérationnel en cas d'irrégularités aléatoires, du type fissures, de cette dernière. Un filtrage adéquat du signal reçu par le capteur, basé sur la périodicité de la géométrie de la carcasse pourrait a priori permettre d'extraire du signal global sa composante représentative des défauts de la couche de pression ; mais du fait des déformations du flexible cette périodicité n'est pas non plus régulière et de plus un tel traitement du signal ne permet pas d'éliminer les signaux provenant des propres défauts ou irrégularités du feuillard.

Les inconvénients énumérés ci-dessus, dûs à la présence de la carcasse et à sa conductibilité électrique, sont encore accentués, comme on le comprendra aisément, si son matériau constitutif n'est pas amagnétique ou s'il est effectivement magnétique ou présente des irrégularités de ses caractéristiques magnétiques.

Une autre technique connue de manière générale en contrôle magnétique est le contrôle par mesure du flux de fuite ou du flux de dispersion. Cette technique consiste à générer dans le produit un champ magnétique et à mesurer directement l'intensité du champ, à proximité de la surface du produit. Classiquement, ce type de contrôle est utilisé sur des matériaux ferromagnétiques. Les lignes de champ s'établissent dans le produit magnétisé selon une direction générale parallèle à sa surface. En présence d'un défaut, ces lignes de champ sont déviées et tendent à sortir du produit, et peuvent ainsi être détectées par mesure du champ local au droit du défaut.

Une application de ce procédé au contrôle de pipeline et un dispositif pour sa mise en oeuvre sont notamment décrits dans le document FR-A-2229970. Le module d'aimantation et de détection décrit dans ce document se compose de plusieurs ensembles magnétiques répartis circonférentiellement pour balayer toute la surface intérieure du pipe-line, lors du déplacement du dit module le long de ce dernier. Chacun de ces ensembles comporte un aimant dont les pôles nord et sud sont maintenus à proximité de la paroi, et un détecteur constitué de diodes magnétorésistives est placé également à proximité de la paroi entre les deux pôles de l'aimant.

Selon la méthode connue de mesure du flux de fuite, il est habituel de travailler près de la saturation magnétique, c'est-à-dire que le champ généré dans le produit est proche du maximum possible, de manière à tenter d'amplifier au maximum les perturbations créées par la présence de défauts, pour les rendre plus facilement détectables.

Par rapport à la méthode de contrôle par courants de Foucault, la mesure de flux de fuite présente l'avantage d'être moins sensible à la présence d'une couche intermédiaire conductrice mais amagnétique entre le capteur et la paroi à contrôler, dans la mesure toutefois où cette couche intermédiaire ne conduit pas à un éloignement excessif du capteur de la dite paroi. En effet, de telles couches électroconductrices amagnétiques constituent théoriquement pour un champ magnétique constant un simple entrefer traversé par les lignes de flux sans que celles-ci soient perturbées, même si ces couches présentent des irrégularités ou une géométrie complexe.

Toutefois, si l'épaisseur cumulée des couches intermédiaires dépasse une valeur de l'ordre de 10 mm, cette méthode s'avère pratiquement inapplicable d'une part car il serait nécessaire d'utiliser un champ générateur très intense pour arriver à saturer la couche à contrôler, ce qui pose un premier problème au niveau des moyens nécessaires pour générer ce champ intense. De plus, comme le détecteur utilisé se trouve également nécessairement éloigné de la surface de la paroi à contrôler, les variations relatives de champ provoquées par les défauts deviennent très petites, car les déviations des lignes de flux provoquées par le flux de fuite sont de plus en plus étalées lorsque l'on s'éloigne du défaut qui en est la cause. Le détecteur se trouve alors dans une situation de mesure de variations très faibles d'un champ intense, ce dont les capteurs connus actuellement ne sont pas capables. Ce problème est encore aggravé par le fait que, les pôles de l'aimant générateur étant eux-même éloignés de la surface de la couche en matériau magnétique à contrôler, il se produit un bouclage direct de certaines des lignes de champ entre les deux pôles de l'aimant, dans l'espace entre les pôles et la surface de la paroi à contrôler et donc en particulier juste à l'endroit où est placé le détecteur. Ces lignes de champ ne sont pas en principe perturbées par le milieu qu'elles traversent, puisque ce milieu est amagnétique. Mais a contrario, ces lignes n'étant pas canalisées par un matériau magnétique, elles reflètent toutes les éventuelles variations originales du champ, qui sont donc détectées par détecteur. On notera que ces variations du champ original sont d'autant plus susceptibles de se produire lorsque la source est un électroaimant, ce qui devient quasiment indispensable pour créer les champs de forte intensité requis.

Les problèmes mentionnés ci-dessus dans le cadre du contrôle d'un flexible par l'intérieur se posent également pour le contrôle par l'intérieur d'autres produits ayant une paroi de structure complexe, ou pour le contrôle par l'extérieur de tels produits tubulaires ou de section pleine tels que les câbles ou produits similaires mentionnés précédemment, ou encore de produits plats tels que des tôles, ou encore des produits dont la paroi présente une forme quelconque telle que des réservoirs ou des cuves.

On connaît également par le document US-A-5336998 un procédé de détection de défauts dans des tuyaux, fabriqués par le procédé bien connu de la coulée centrifuge, selon lequel on crée dans le tuyau un champ magnétique en faisant circuler un fort courant continu dans un conducteur placé axialement dans le tuyau. Puis, après avoir enlevé le conducteur, on place une rangée de détecteurs le long du tuyau et on fait tourner ce dernier, de sorte que les détecteurs détectent au cours de cette rotation les éventuels fuites de flux provoquées par des défauts et résultant de la magnétisation rémanente subsistant dans le tuyau. Ce procédé ne peut toutefois être utilisé que pour des tuyaux de longueur limitée puisque l'étape de magnétisation nécessite de pouvoir accéder aux deux extrémités du tuyau, et l'étape de mesure nécessite de faire tourner le tuyau sur lui-même, et de plus il nécessite une puissance très importante pour effectuer la magnétisation globale du tuyau. Ce procédé ne convient donc pas au contrôle des produits de grande longueur visés par l'invention.

L'invention a pour but de résoudre les problèmes ci-dessus et vise en particulier à améliorer la fiabilité de détection de défauts dans des produits de grande longueur dont la couche à contrôler n'est pas directement accessibles aux moyens de contrôle, à permettre la détection de défauts situés en profondeur dans la paroi du produit à contrôler, que ces défauts soient eux même éloignés de la surface de la couche en matériau magnétique à contrôler ou qu'ils soient seulement éloignés de l'outil de mesure du fait de couches intermédiaires entre ce dernier et la couche à contrôler, et vise également à obtenir le maximum d'informations caractéristiques des défauts détectés en une seule opération de contrôle.

Avec ces objectifs en vue, l'invention a pour objet un procédé de contrôle magnétique de produits de grande longueur, notamment de produits tubulaires tels que des tuyaux, dont la paroi comporte au moins une couche en matériau ferromagnétique, selon lequel on magnétise la dite couche par un champ orienté parallèlement à la surface de la dite paroi, on déplace le long de la paroi un détecteur de champ magnétique et on mesure le champ magnétique au voisinage de la surface accessible du produit, des variations du champ mesuré (le long de la paroi) étant significatives de défauts affectant la dite couche, caractérisé en ce que la magnétisation est effectuée en déplaçant longitudinalement par rapport au dit produit des moyens de magnétisation créant un champ d'aimantation localisé, de manière à générer dans la dite couche une aimantation rémanente, et en ce que la mesure est effectué au défilement après la dite magnétisation, en la seule présence de la dite aimantation rémanente.

Le procédé selon l'invention permet d'améliorer considérablement la détection de défauts affectant des produits allongés, notamment lorsque leur paroi est épaisse et/ou composée de plusieurs couches superposées et que les défauts à détecter sont situés dans une couche non directement en contact avec la surface accessible du produit.

En effet, la mesure effectuée uniquement en présence d'une aimantation rémanente dans la couche ferromagnétique à contrôler permet de détecter même de très petites variations du champ, notamment dans l'espace intérieur du produit, à proximité de sa surface accessible, puisque ces petites variations causées par des défauts sont les seules manifestations de champ sensibles à l'extérieur de la paroi, toutes les lignes de champ étant autrement contenues dans le matériau ferromagnétique de la couche à contrôler, puisque seul le champ magnétique rémanent subsiste au moment de la mesure.

En particulier, le procédé permet de s'affranchir de toutes les perturbations pouvant être provoquées par la magnétisation, du fait que celle-ci a lieu avant la mesure, soit en déplaçant d'abord les moyens de magnétisation pour effectuer une magnétisation au défilé de l'ensemble du produit, puis en déplaçant les moyens de mesures, indépendamment des dits moyens de magnétisation, pour effectuer la mesure également au défilé, soit, notamment lorsque les produits sont de très grande longueur, en déplaçant simultanément les moyens de magnétisation et les moyens de mesure, mais ces derniers étant alors suffisamment éloignés en arrière des moyens de magnétisation pour ne pas subir leur influence directe.

Un autre avantage du procédé selon l'invention est qu'il améliore la détectabilité des fissures de fatigue. En effet, le champ rémanent est très sensible aux variations locales de certaines caractéristiques métallurgiques, telles que la dureté, associées à des anomalies de certaines caractéristiques magnétiques du matériau, telles que champ coercitif, induction rémanente et anisotropie magnétique. Or une fissure de fatigue se caractérise notamment par une dureté importante des deux lèvres de la fissure. Ainsi, dans un tel cas, le signal de défaut dû uniquement à l'accident géométrique que constitue la fissure est augmenté du signal dû uniquement aux variations locales des propriétés magnétiques, ce qui accroît en conséquence la détectabilité de telles fissures de fatigue.

On comprendra aussi aisément que le procédé selon l'invention permet de s'affranchir des problèmes indiqués préalablement pour un contrôle par courants de Foucault, puisque, au moment de la mesure, le champ présent est fixe et constant et donc non susceptible de générer de tels courants générateurs à leur tour de variations de champ dans le temps.

Préférentiellement, avant de magnétiser la dite couche, on procède à une démagnétisation de la paroi. Ainsi on fixe, préalablement à la magnétisation, un état magnétique le plus homogène possible, puisque sensiblement absent de tout magnétisme, dans toute l'épaisseur de la paroi, non seulement dans la couche à contrôler mais aussi dans toute autre couche susceptible d'aimantation homogène ou non. De ce fait, l'état magnétique obtenu après la magnétisation est lui aussi le plus homogène possible puisque résultant de cette seule magnétisation volontaire, et indépendant de l'historique magnétique du produit avant son contrôle. Par ailleurs, cette démagnétisation préalable permet d'effectuer la magnétisation sans aller jusqu'à une saturation magnétique poussée de la couche à contrôler, qui, autrement, serait souhaitable pour obtenir une homogénéité suffisante de l'état magnétique du produit.

On notera à ce sujet que l'étape de démagnétisation permet ainsi d'utiliser des moyens de magnétisation moins puissants, et moins consommateurs d'énergie lorsque ces moyens sont des électroaimants.

Selon une autre disposition préférentielle, pour l'application du procédé à la détection de défauts dans un produit dont la paroi comporte, entre la couche à contrôler et sa surface accessible, une couche intermédiaire non totalement amagnétique, on procède, après la dite magnétisation, à une démagnétisation sélective de la dite couche intermédiaire. Cette démagnétisation sélective, effectuée à une fréquence déterminée en fonction de l'épaisseur et de la nature de la couche intermédiaire, en tenant compte de l'effet de peau, pour affecter le moins possible l'état magnétique de la couche à contrôler obtenu par la magnétisation préalable, permet de supprimer les éventuelles variations de champ qui seraient provoquées par la présence d'un champ rémanent dans une couche intermédiaire non totalement amagnétique ou à des irrégularités des caractéristiques magnétiques de cette couche.

D'une façon générale, le procédé ayant pour but de détecter les défauts à partir des variations de champ rémanent provoquées par ces défauts, consiste :
- à créer un champ rémanent dans le produit de telle sorte que la portée de l'éventuel champ rémanent de la zone intermédiaire soit inférieure à celle du champ rémanent de la zone à contrôler à l'endroit du défaut qu'il faut détecter,
- à disposer au moins un capteur à une position hors de portée du champ rémanent de la zone intermédiaire tout en étant sensible au champ rémanent caractéristique du défaut à détecter.

La portée du champ rémanent de la zone intermédiaire peut être affectée par les éventuelles imperfections de la démagnétisation sélective, ou par les irrégularités du champ rémanent de la zone intermédiaire dans le cas où son intensité moyenne est faible et qu'on procède alors au contrôle sans démagnétisation sélective.

Une méthode particulière pour mettre en oeuvre l'invention consiste ainsi à disposer un capteur à une distance telle, par rapport à la surface accessible, que le capteur reste à portée du champ caractérisant le défaut à contrôler et hors de portée du champ rémanent de la zone intermédiaire. Du fait que la distance optimale par rapport à la surface accessible peut varier en fonction de la région inspectée (par exemple en fonction de la position dans la longueur de la conduite), en fonction du défaut et des petites variations des caractéristiques de la paroi, il est possible de procéder de deux façons différentes :
- disposer au moins deux capteurs à des distances différentes par rapport à la surface accessible, de sorte qu'au moins un capteur se trouve à la bonne distance,
- ou provoquer un déplacement du capteur pour l'amener à la position voulue, ceci étant possible si l'opération de contrôle est réalisée non pas de façon continue en déplaçant le dispositif de mesure, mais à l'arrêt, le dispositif progressant par une succession d'étapes de contrôle à l'arrêt et de phases élémentaires de déplacement entre deux étapes de contrôle successives.

L'invention a aussi pour objet un dispositif pour la mise en oeuvre du procédé ci-dessus. Ce dispositif, qui comporte des moyens de magnétisation adaptés pour générer dans la paroi du produit un champ magnétique orienté parallèlement à sa surface accessible, et des moyens de mesure du champ au voisinage de la dite surface, les moyens de magnétisation et les moyens de mesure étant adaptés pour être déplacés parallèlement à la dite surface, est caractérisé en ce que les moyens de magnétisation sont agencés de manière à générer un champ d'aimantation localisé, et en ce que les moyens de magnétisation et les moyens de mesure sont, lors de leur utilisation, éloignés l'un de l'autre d'une distance telle que le champ magnétique généré par les moyens de magnétisation n'est pas directement mesurable par les dits moyens de mesure.

Les moyens de magnétisation et les moyens de mesure peuvent être déplacés à la surface du produit successivement et indépendamment l'un de l'autre, ou simultanément, à condition d'être suffisamment éloignés l'un de l'autre pour que les moyens de mesure ne soient pas influencés par le champ émis par les moyens de magnétisation.

Préférentiellement, les moyens de mesure comportent des capteurs disposés de manière à mesurer le champ magnétique dans plusieurs directions en chaque point de mesure, ce qui permet d'obtenir en chaque point la valeur des différentes composantes spatiales du champ et leurs variations en fonction l'une de l'autre et en fonction de ces directions. En conséquence, il est possible non seulement de localiser des défauts mais aussi de les caractériser et, par un traitement adéquat des signaux de mesure, de supprimer les informations de faux défauts résultant par exemple de la seule géométrie de la couche à contrôler.

D'autres caractéristiques et avantages apparaîtront dans la description qui va être faite, uniquement à titre d'exemple, d'un dispositif conforme à l'invention pour le contrôle de canalisation de transport de pétrole.

On se reportera aux dessins annexés dans lesquels :
- la figure 1 est une vue en perspective d'une portion de canalisation flexible utilisée pour le transport de pétrole,
- la figure 2 est une vue en coupe partielle de la paroi de cette canalisation,
- les figures 3 et 4 représentent schématiquement les deux étapes successives de magnétisation et de mesure effectuées lors du contrôle d'une extrémité d'une canalisation verticale, telle que l'extrémité, liée à une plate-forme de forage, d'une canalisation d'extraction de pétrole,
- la figure 5 représente un premier mode de réalisation des moyens de magnétisation,
- la figure 6 représente un deuxième mode de réalisation des moyens de magnétisation,
- la figure 7 représente schématiquement les moyens de mesure,
- la figure 8 illustre la répartition des lignes de champ dans la couche à contrôler d'un flexible tel que celui représenté figure 1, dans la direction axiale du flexible,
- la figure 9 montre, dans une coupe transversale, une fissure orientée axialement, telle qu'une fissure ou rupture transversale d'un fil de voûte spiralé avec un pas court,
- la figure 10 illustre la déflexion des lignes de champ dans la direction circonférentielle du flexible, en présence d'une fissure orientée circonférentiellement, telle qu'une fissure longitudinale d'un tel fil de voûte,
- la figure 11 représente schématiquement, à titre comparatif, la répartition des lignes de champ dans le cas d'un contrôle d'une canalisation rigide revêtue intérieurement par la méthode du flux de fuite selon l'art antérieur,
- la figure 12 représente la mesure de deux composantes du champ rémanent en présence d'un défaut dans la couche à contrôler et les signaux correspondants,
- la figure 13 illustre une disposition des capteurs pour effectuer des mesures différentielles,
- la figure 14 illustre une autre disposition des capteurs permettant de réduire l'influence des variations d'écartement entre ceux-ci et la couche à contrôler,
- la figure 15 représente schématiquement une variante de mise en oeuvre de l'invention, au moyen d'un dispositif de contrôle autonome, pour le contrôle de canalisations de grande longueur,
- la figure 16 illustre le principe d'une première variante de réalisation des moyens de démagnétisation,
- la figure 17 illustre une deuxième variante de ces moyens de démagnétisation.

Les dessins des figures 1 et 2 représentent un exemple typique de flexible ayant une paroi 1 de structure complexe, déjà décrite au début de ce mémoire. Le contrôle d'un tel flexible nécessite notamment la détection de défauts dans la voûte de pression 11 qui est située pratiquement au coeur de la paroi, entre d'une part la gaine d'étanchéité 12 et la carcasse interne 13 et d'autre part les nappes d'armures 14. Il ressort clairement de la figure 2 qui montre une coupe longitudinale de la paroi 1, que le contrôle du flexible par l'intérieur conduit à ce que les moyens de contrôle et notamment le ou les capteurs de mesure 2 sont relativement éloignés de la couche à contrôler 11, d'une distance au moins égale à l'épaisseur cumulée de la gaine 12 et de la carcasse 13 qui atteindre 20 mm ou plus.

Sur les dessins des figures 3 et 4 on a représenté schématiquement le dispositif utilisé pour effectuer le contrôle de la voûte 11 à proximité de la connexion du flexible avec une plate-forme pétrolière. Le dispositif comporte des moyens d'entraînement, tels que un treuil 32 pour déplacer alternativement et successivement une tête de magnétisation 30 ou une tête de mesure 45, supportées par le câble 31 du treuil 32. La tête de magnétisation, schématiquement représentée figure 5, comporte une carcasse magnétique 36, par exemple en fer-silicium feuilleté, formée d'un noyau central 37 s'étendant axialement et de deux portions d'extrémités en forme de disques constituant les pôles 38 du circuit magnétique. Pour diriger le mieux possible les lignes de flux 40 vers la couche à magnétiser, le pourtour des pôles 38 est garni d'éléments souples de conduction des lignes de flux magnétiques, tels que des brosses métalliques 39, qui peuvent ainsi être maintenues en contact avec la surface interne du flexible même en cas de légères variations de sa section interne. Un solénoïde 41 est bobiné autour du noyau 37 et relié à un générateur 33 par un câble d'alimentation électrique 34. La tête de magnétisation est par ailleurs centrée dans le flexible par des galets 42. Une telle tête de magnétisation permet de générer dans le flexible une aimantation axiale qui favorise la détection de fissures orientées perpendiculairement à l'axe. D'autres moyens de magnétisation peuvent également être utilisés, par exemple pour créer une aimantation circonférentielle transversale à la direction axiale ou une aimantation multidirectionnelle, tels que par exemple ceux décrits dans le document EP-A-0639839 ou des moyens équivalents dans leur principe.

Dans une variante de réalisation de la tête de magnétisation, représentée figure 6, l'électroaimant formé par la bobine 41 et le noyau 37 peut être remplacé par un aimant permanent 43. Une telle variante permet de se dispenser de l'utilisation du générateur 33.

Dans une première phase du contrôle, la tête de magnétisation est descendue dans le flexible 1 jusqu'à l'extrémité inférieure de la zone à contrôler, puis le générateur 33 est mis en marche et alimente la tête de magnétisation qui est alors remontée à vitesse constante au moyen du treuil 32 jusqu'à l'extrémité supérieure du flexible. Lors de cette remontée, la ou les couches ferromagnétiques de la paroi du flexible sont magnétisées et conserve une aimantation rémanente après le passage de la tête de magnétisation.

Une fois la tête de magnétisation retirée du flexible, celle-ci est remplacée par la tête de mesure 45 qui est déplacée dans le flexible de manière similaire à la tête de magnétisation. Cette tête, représentée schématiquement figure 7, comporte les moyens de mesure du champ magnétique et est guidée dans le flexible par des galets 46. Elle comporte un ou plusieurs ensembles de capteurs 47 appliqués contre la surface interne de la paroi 1 par un patin 48 et un ressort d'appui 49. Elle est reliée à un boîtier électronique 50 de traitement du signal fourni par les capteurs.

Une fois la tête de mesure descendue en bas de la zone à contrôler, celle-ci peut être remontée à vitesse constante, les mesures étant faites en continu au cours de la remontée, par des capteurs en réseaux répartis en nombre suffisant sur sa périphérie pour contrôler toute la section du flexible. Toutefois, préférentiellement, les capteurs seront montés mobiles en translation axiale et en rotation autour de l'axe de la tête de mesure et une motorisation adéquate assurera un déplacement précis des capteurs.

Dans une variante de mise en oeuvre du procédé, on effectue entre les deux étapes de magnétisation et de mesure une étape intermédiaire de démagnétisation partielle sélective à l'aide d'une tête de démagnétisation 52.

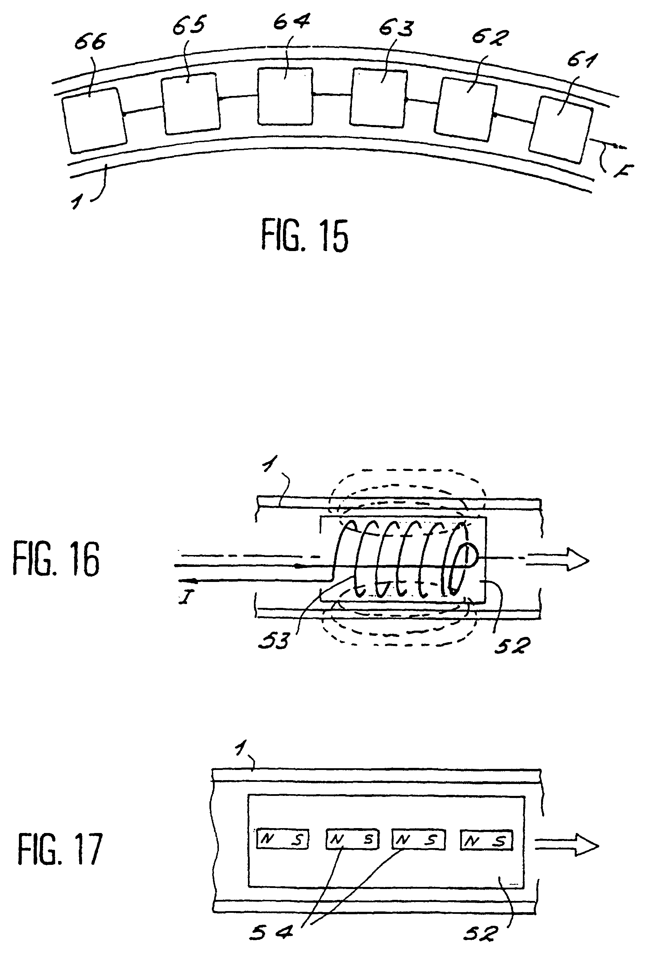

Dans un premier mode de réalisation, représenté figure 16, cette tête de démagnétisation comporte un solénoïde 53.

La tête de démagnétisation peut aussi comporter, comme représenté figure 17, à la place du solénoïde 53 alimenté en courant alternatif, une pluralité d'aimants permanents 54.

Le principe de tels moyens de démagnétisation ou d'autres encore équivalents est notamment décrit dans le document EP-A-0639839.

Dans une autre variante de mise en oeuvre du procédé, on effectue avant l'étape de magnétisation une étape préliminaire de démagnétisation du flexible destinée à homogénéiser préalablement l'état magnétique de l'ensemble de la paroi. Cette démagnétisation totale peut être effectuée par des moyens similaires à ceux utilisés pour la démagnétisation partielle, mais avec des champs magnétiques plus intenses ou de fréquence plus faible pour atteindre les couches de la paroi les plus éloignées de la tête de démagnétisation.

Dans la méthode de contrôle qui vient d'être décrite ci-dessus, les différentes étapes de magnétisation et de mesure, et optionnellement les étapes de démagnétisation, sont réalisées successivement dans l'ordre indiqué mais indépendamment l'une de l'autre. Une telle méthode n'est en pratique applicable que lorsque les canalisations à contrôler sont facilement accessibles sur toute la longueur à contrôler, donc pour des canalisations courtes ou pour les zones d'extrémités de canalisations longues, du fait notamment des liaisons mécaniques et électriques nécessaires avec les appareillages externes à la canalisation.

Pour effectuer le contrôle d'une canalisation longue ou de zones de telles canalisations éloignées des extrémités, par exemple des flexibles sous-marins qui peuvent atteindre ou même dépasser 1000 m, on utilisera un dispositif de contrôle autonome déplaçable dans la canalisation par ses propres moyens. La figure 15 représente un tel dispositif, constitué de plusieurs modulés 61 à 66 attelés les uns aux autres par des éléments de liaisons articulés 67 pour permettre à l'ensemble de cheminer même dans les courbes du flexible.

Le premier module 61 dans le sens de déplacement représenté par la flèche F est un module d'entraînement qui peut comporter par exemple des moyens d'entraînement mécanique par contact avec la surface interne du flexible ou des éléments d'étanchéité permettant la propulsion par le liquide déplacé dans la canalisation, de manière à déplacer simultanément tous les modules à l'intérieur de la canalisation

Le deuxième module 62 est un module d'aimantation comportant une tête d'aimantation du type décrit précédemment, préférentiellement équipée d'aimants permanents pour éviter de devoir recourir à une source d'énergie annexe.

Le troisième module 63 est un module de démagnétisation sélective, également équipé préférentiellement d'aimants permanents.

Le quatrième module 64 est un module de mesure portant les capteurs de mesure de champ rémanent, préférentiellement disposés en réseau annulaire recouvrant toute la circonférence et en double rangée pour que les zones de mesure de deux capteurs adjacents se recouvrent.

Le cinquième module 65 est un module de traitement et de stockage des signaux fournis par les capteurs et de mesure de la position du dispositif dans la conduite.

Le sixième module 66 est un module d'alimentation comportant des batteries pour l'alimentation électrique des autres modules.

Dans le cas où une démagnétisation totale préalable doit être effectuée, un module supplémentaire de démagnétisation (non représenté) est placé en amont du module de magnétisation, c'est à dire de l'autre coté de ce module par rapport au module de mesure.

La distance entre les différents modules, notamment entre le module de mesure 64 et les modules précédents est suffisamment grande pour que les capteurs du dit module de mesure ne soient pas influencés par les champs magnétiques des modules d'aimantation 62 et de désaimantation sélective 63. Cette distance est déterminée de manière notamment que, à tout moment, le champ magnétique mesuré par les capteurs reste identique à celui que l'on mesurerait si la distance séparant le module de mesure 64 des modules 62,63 créant des champs était considérablement accrue ( par exemple de l'ordre de 100 m ), tout en laissant le module de mesure immobile et en déplaçant les dits modules créant des champs.

Des ensembles destinés à se déplacer dans des canalisations de manière autonome sont déjà connus et on pourra en particulier se reporter à titre d'exemple à la description d'un tel ensemble faite dans le document FR-A-2229970 déjà cité. Les éléments de structure générale des dits modules et leurs moyens de liaison pourront être aisément adaptés de manière adéquate par l'homme du métier, sur la base des dispositifs équivalents déjà connus.

Pour mieux comprendre les avantages du procédé et du dispositif selon l'invention, on va maintenant donner des explications complémentaires sur les spécificités de l'invention en prenant comme exemple le contrôle de flexibles du type représentés figures 1 et 2.

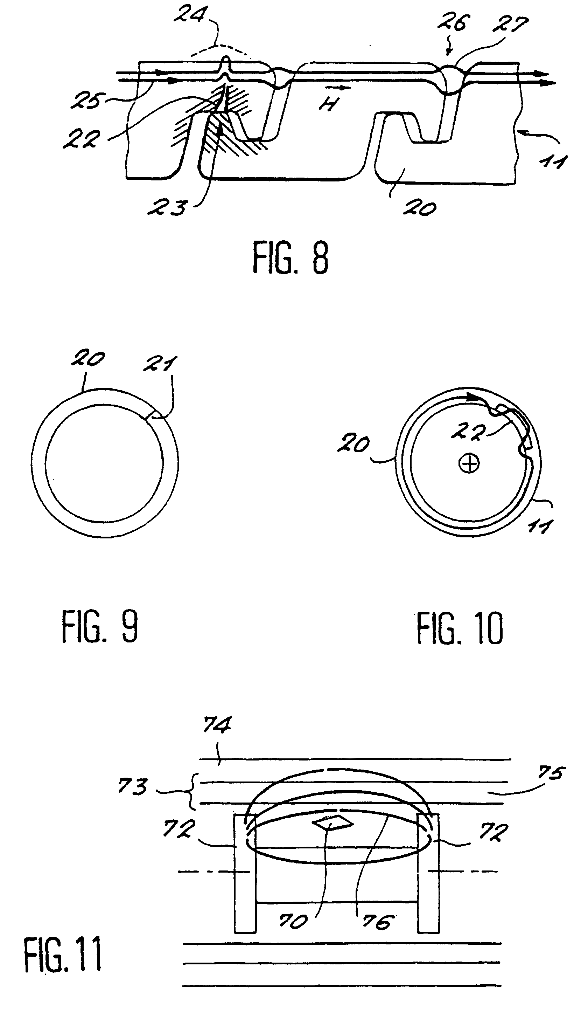

Il est précisé que les défauts que l'on souhaite détecter dans ces flexibles sont essentiellement dans ce cas les défauts de la voûte de pression 11, réalisée dans l'exemple considéré, par un fil de type zêta 20 spiralé en pas court et agrafé sur lui même, comme on le voit figures 2 et 8. Les défauts affectant cette couche peuvent être de différents types :
- ruptures transversales 21 du fil, donc orientées sensiblement parallèlement à l'axe du flexible, comme représenté figure 9,
- fissures longitudinales 22 du fil, donc orientées transversalement par rapport à l'axe du flexible, comme représenté figure 8,
- dégrafage de spires adjacentes, etc.

On notera que les ruptures 21 du fil apparaissent en général suite au développement de fissures longitudinales 22 qui apparaissent elles-même essentiellement dans la zone d'agrafage 23 , d'épaisseur réduite, du profilé zêta. Une rupture transversale du fil étant un défaut grave, on donnera donc priorité à la détection de fissures longitudinales du fil puisque celles ci apparaissent avant les ruptures transversales, et, en conséquence, comme on le comprendra mieux par la suite, on privilégiera une magnétisation de type axial du flexible, illustrée figure 8, plus adaptée pour détecter de telles fissures qui s'étendent transversalement à l'axe du flexible.

La première démagnétisation effectuée avant la magnétisation de la couche à contrôler permet, comme on l'a déjà vu, d'homogénéiser l'état magnétique de l'ensemble des couches de la paroi. Le champ magnétique généré à cet effet doit donc avoir une forte intensité, et une fréquence basse, par exemple d'environ 50 Hz, afin d'atteindre les couches les plus éloignées de l'intérieur du flexible, pour éviter qu'une magnétisation résiduelle subsistant dans certaines couches avant la magnétisation crée des variations du champ rémanent après la magnétisation.

Compte tenu de la forte consommation d'énergie qui peut être nécessaire pour cette démagnétisation totale, on pourra toutefois s'en dispenser, notamment dans le cas d'une canalisation de très grande longueur à contrôler par un dispositif autonome tel que décrit précédemment, pour éviter d'alourdir le dispositif par une source d'énergie de forte puissance ou de limiter son autonomie.

La magnétisation doit permettre de créer un champ rémanent suffisant pour pouvoir détecter ultérieurement les petits défauts et les défauts situés en profondeur dans la couche à contrôler.

L'intensité d'aimantation est ajustée de manière à assurer un compromis optimal entre les deux phénomènes suivants :
- pour maximiser le niveau d'aimantation rémanente, il convient d'atteindre au moins le début du coude de saturation magnétique du matériau constituant la couche à contrôler,
- pour minimiser les composantes normales du champ rémanent, qui résultent du fait que les lignes de flux 40 du champ d'aimantation sont sensiblement perpendiculaires à la surface inspectée aux extrémités de la tête de magnétisation (voir figures 5 et 6), il est cependant préférable de ne pas trop augmenter l'aimantation.

A titre d'exemple, l'intensité d'aimantation sera de l'ordre de 4000 à 8000 A/m. Dans ce cas l'intensité du champ rémanent H à la surface de la couche à contrôler est typiquement comprise entre 500 et 2000 A/m, et la variation de l'intensité de ce champ au niveau d'un défaut se situe typiquement dans la fourchette de 50 à 200 A/m.

La démagnétisation sélective permet d'homogénéiser le champ rémanent qui a pu être créé lors de la magnétisation dans un couche interne non totalement amagnétique, telle que, dans l'exemple considéré, la carcasse interne 13, en réduisant ce champ à son minimum. En effet, bien que réalisée couramment en acier inoxydable austénitique, cette carcasse peut, en fonction des nuances d'acier utilisés, être légèrement magnétique et, d'autre part, la mise en forme du feuillard qui la constitue peut conduire à des hétérogénéité des caractéristiques magnétiques dans la section de ce feuillard. De ce fait la magnétisation du flexible peut entraîner la création d'un champ rémanent dans la carcasse, lequel est d'autant plus susceptible de variations dans la longueur du flexible à cause de la géométrie complexe du dit feuillard, des éventuelles irrégularités du pas d'enroulement du feuillard et des dites hétérogénéités magnétiques.

En supprimant tout champ rémanent dans cette carcasse 13, la démagnétisation sélective permet d'éviter que toutes ces irrégularités ne soient détectées lors de la mesure comme des défauts, ou qu'elles ne génèrent des signaux masquant les signaux de vrais défauts de la voûte de pression.

On notera que, de manière similaire, cette démagnétisation sélective permet de démagnétiser une couche quelconque intermédiaire entre une couche à contrôler d'une canalisation et son espace intérieur. Elle permet en conséquence de contrôler, dans une canalisation comportant plusieurs couches en matériau magnétique , une couche éloignée et séparée de l'intérieur par une autre couche en matériau magnétique, ou, dans le cas d'une canalisation rigide ou semi-rigide à paroi épaisse, de détecter des défauts situés en profondeur dans cette paroi ou vers l'extérieur de celle-ci, en s'affranchissant des éventuelles irrégularités géométriques ou magnétiques de la couche superficielle interne de cette paroi.

Comme indiqué précédemment, cette démagnétisation sélective devra donc être effectuée en tenant compte de la structure géométrique du flexible, des matériaux qui constituent sa paroi et des caractéristiques de la couche que l'on souhaite contrôler et des défauts que l'on souhaite détecter, de manière à optimiser l'apparition du flux de fuite provoqué spécifiquement par ces défauts.

Une fois effectuées ces opérations de magnétisation et démagnétisation sélective, la détection et la mesure du flux de fuite peut être réalisée. On notera que l'intensité du champ mesurable par le capteur est relativement faible du fait de la distance importante entre la voûte 11 et le capteur 2.

C'est pourquoi, dans les méthodes connues de contrôle par mesure du flux de fuite, on cherche à augmenter l'intensité du champ généré dans la couche à contrôler pour augmenter corrélativement l'intensité du flux de fuite provoqué par les défauts ; et c'est pourquoi, en conséquence, dans ces méthodes connues, on place le capteur 70 dans la zone où le champ généré dans le produit est le plus intense, c'est à dire entre les pôles 71, 72 de la source de champ, comme représenté figure 11 et décrit dans le document FR-A-2229970. Ceci présente toutefois l'inconvénient, notamment lorsque l'entrefer 73 entre les dits pôles et la surface de la couche magnétique 74 à analyser est important, comme c'est le cas pour les flexibles pris en exemple ou pour des canalisations rigides revêtues intérieurement d'une couche 75 de matériau polymère, que des lignes de flux 76 se bouclent directement entre les dits pôles. Le capteur 70, situé entre ces pôles, est directement soumis à ce flux de magnétisation qui peut être très intense par rapport au flux de fuite créé par un défaut et qui tend par ailleurs à lisser les émergences du flux de fuite. En conséquence, bien que l'intensité de ce flux de fuite augmente avec celle du champ générateur, les variations mesurables de ce flux de fuite sont finalement faibles, de l'ordre de 10 à 15 Oersted (800 à 1200A/m), par rapport au champ total existant au niveau du capteur, lequel champ peut de plus être lui même perturbé par des variations, indépendantes du produit à contrôler provenant du générateur de champ lui même.

Les inventeurs ont en fait découvert que, contre toute attente, bien que l'intensité d'un flux de fuite provoqué par un défaut est 10 à 20 fois plus faible en présence d'un champ rémanent que en présence d'un champ généré au moment de la mesure, la détection des défauts est notablement améliorée dans le cas de la mesure effectuée en présence du seul champ rémanent. On notera que l'amplitude typique d'un flux de fuite de défaut, mesuré dans un tel cas avec un entrefer faible de l'ordre de 3 mm, est de l'ordre de 1 Oersted (80 A/m), et peut devenir inférieur à 0,1 Oersted pour des entrefers plus importants de l'ordre de 15 à 20 mm par exemple. Une explication à cela est que, bien que le signal de défaut mesuré est faible, le bruit du signal est lui aussi très faible du fait de l'absence de champ excitateur. De plus, la variation relative ΔH/H du champ à mesurer est assez importante puisque le champ H en chaque point est uniquement due aux lignes de champ rémanent, à l'exclusion du champ de magnétisation.

Bien que différents types de capteurs puissent être utilisés, par exemple des capteurs à effet Hall, on utilisera préférentiellement, pour compenser la faible intensité du flux de fuite, des capteurs de forte sensibilité et de forte résolution, tel que des magnétorésistances ou des magnétodiodes, préférentiellement encore montées en pont de Wheatstone, ou encore des magnétomètres compacts dont le principe est basé sur les effets non linéaires des ferrites. De tels capteurs permettent de mesurer des variations de champ inférieures à 0,1 ou même 0,01 Oersted, et présentent une résolution spatiale de quelques 1/10 mm, avec une bande passante en fréquence de 0 à quelques milliers de Hertz, permettant une détection de défauts de faibles dimensions même avec un déplacement rapide du capteur dans la canalisation, la vitesse de déplacement pouvant varier par exemple de 0 à quelques mètres par seconde.

Comme cela a été représenté, de manière volontairement exagérée, à la figure 8, les déviations 24 des lignes de flux 25, provoquées par la fissure 22, sont d'autant plus étalées que l'on s'éloigne du dit défaut. Une résolution spatiale importante permet de faciliter la détection de défauts éloignés du capteur en évitant de lisser la réponse du capteur à un tel flux de fuite.

Un capteur particulièrement adapté, réalisé avec des magnétorésistances montées en pont, est décrit dans la demande de brevet français n°93.15783, à laquelle on pourra se reporter, et dont l'enseignement concernant ce capteur est inclus par référence dans la présente demande.

Afin d'améliorer la détection et l'identification des défauts, plusieurs capteurs peuvent être associés en étant disposés de manière à mesurer chacun une composante spatiale du champ au point de mesure, c'est à dire un capteur disposé pour mesurer la composante H_{N} du champ normale à la surface inspectée, et un ou deux autres capteurs disposés pour mesurer la ou les composantes tangentielles H_{T1} et H_{T2}. respectivement dans la direction principale du champ rémanent et dans la direction perpendiculaire.

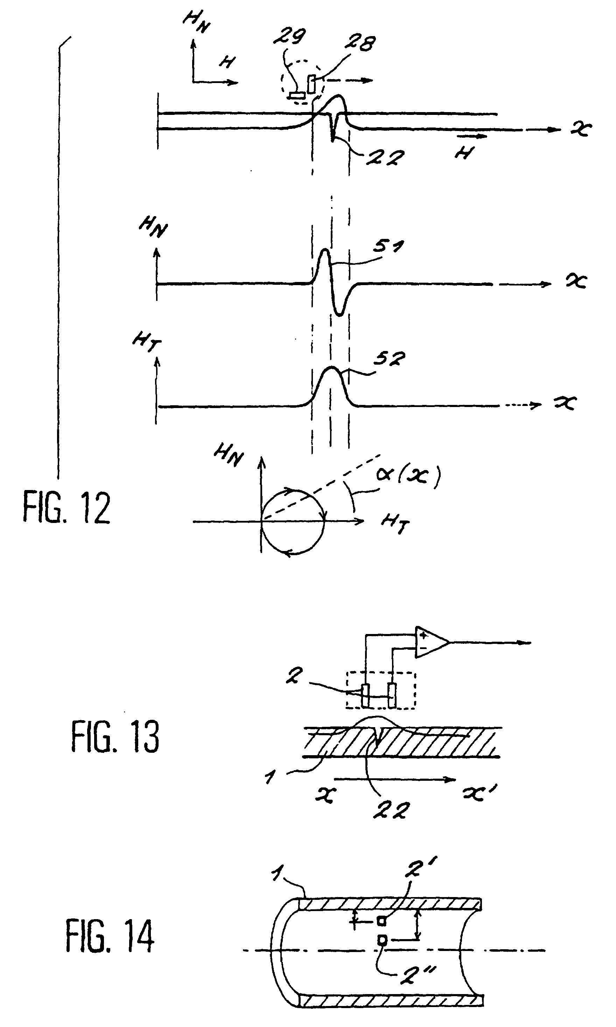

Un exemple d'utilisation de deux capteurs ainsi associés est illustré figure 12. Le capteur 28 est orienté de manière à mesurer la composante normale H_{N} et le capteur 29 est orienté pour mesurer la composante H_{T1}, dans la direction du déplacement des capteurs. Les signaux correspondants fournis par les capteurs en présence d'une fissure 22 sont représentés par les courbes S1 et S2 de la figure 12 qui montre également, à titre d'exemple des renseignements que l'on peut ainsi obtenir sur le défaut 22, une représentation graphique des variations de H_{N} en fonction de H_{T} permettant de déterminer l'orientation α(x) du flux de fuite par rapport à la direction de déplacement x et donc de caractériser le type de défaut détecté.

Des mesures simultanées de deux ou trois composantes des variations de champ permettent notamment, par un traitement adéquat des signaux fournis par chacun des capteurs ainsi associés, de s'affranchir des éventuelles perturbations provenant de variations de la vitesse de déplacement des capteurs par rapport à la canalisation. Ainsi, dans le cas illustré figure 12, la fonction H_{N}(H_{T1}) qui est indépendante de la vitesse de déplacement des capteurs peut être exploitée directement sans qu'il soit nécessaire d'utiliser des filtres sélectifs comme ce serait le cas pour les signaux fournis en fonction du temps.

Deux capteurs identiques pourront aussi être montés côte à côte dans la direction x-x' de l'aimantation, comme représenté figure 13, pour effectuer des mesures différentielles. Un tel montage, dont le principe est bien connu, permet d'améliorer encore la sensibilité et la résolution en différenciant, selon la direction x-x' de l'aimantation, le champ mesuré. D'autres capteurs pourront aussi être montés en différentiel de manière similaire, en étant orientés selon les directions des autres composantes du champ. La distance entre les deux capteurs d'un même couple sera optimisée en fonction de la géométrie des défauts à détecter et des perturbations périodiques éventuelles à atténuer.

Par ailleurs, on pourra utiliser, pour chaque composante du champ, un ensemble de deux capteurs liés entre eux et superposés selon la direction radiale de la canalisation, comme représenté figure 14. Une telle disposition permet de réduire l'influence des éventuelles variations d'entrefer entre capteur et couche à contrôler. En effet, le capteur 2' le plus proche de la paroi est sensible à la fois aux défauts et aux variations de cet entrefer, et le capteur 2" plus éloigné de la paroi est sensible pratiquement uniquement à ces variations d'entrefer. On comprendra aisément que la différence des deux signaux obtenus permettra de supprimer les perturbations dues à ces variations d'entrefer.

Une détection optimale des défauts se trouve encore confrontée à un autre problème résultant des caractéristiques géométriques de la couche à contrôler. En effet, dans le cas du flexible considéré, les zones de déjoint ou interstices 26 entre deux spires successives 20 induisent une déformation 27 des lignes de flux 25, représentée figure 8, et donc un flux de fuite auquel le capteur pourra être sensible, d'autant plus que, comme indiqué précédemment, les défauts que l'on souhaite préférentiellement détecter sont les fissures longitudinales du fil zêta 20, et les éventuels dégrafages, et que, dans ce but, l'aimantation préférentielle est orientée selon l'axe du flexible, et donc également transversalement à la direction de dits joints. Pour supprimer ou au moins limiter l'influence de ces déformations 27 des lignes de flux dues aux joints 26, on effectue un filtrage passe-haut du signal.

En effet, comme on le comprendra au vu de la figure 8, les signaux correspondants à ces joints sont plus étalés que les signaux de fissures, du fait que la largeur de ces joints est classiquement plus grande (de l'ordre de 1 mm) que celle des fissures (de quelques 1/10 mm au maximum), qui provoquent donc un signal de fréquence plus élevée.

Par ailleurs, il a été constaté que malgré l'écartement relativement important de ces joints, l'amplitude des signaux correspondants reste limitée, ce qui a été expliqué par le fait que les congés arrondis de la section du fil de forme, par exemple le profilé zêta, et le contact entre deux spires adjacentes situé dans le milieu de l'épaisseur de la couche de voûte, favorisent le guidage des lignes de champ vers l'intérieur de cette couche et donc diminuent l'amplitude du flux de fuite provoqué par ces joints par rapport à celle qui serait obtenue avec des congés anguleux, ce qui est donc favorable pour la détection des fissures.

On notera encore que l'aimantation axiale, telle qu'illustrée figure 8, est particulièrement favorable pour la détection des fissures longitudinales du fil profilé constituant la voûte 11, que ce fil soit un profilé du type zêta ou de tout autre type classiquement utilisé pour les flexibles pris en exemple, du fait qu'elle facilite la détection de telles fissures orientées transversalement au dit champ et qu'elle permet, par des mesures effectuées sur la circonférence du flexible, de déterminer la longueur de telles fissures. Il a de plus été constaté que cette aimantation permet également de détecter des ruptures transversales du fil.

En variante, il est possible d' effectuer une aimantation orientée circonférentiellement, qui facilite l'identification des fissurations transversales dans un fil spiralé à pas faible, telles que la fissure 21 du fil 20, représentée figure 9. Concernant les fissurations longitudinales, dont on a souligné qu'il est important de pouvoir les repérer, il est possible de les identifier par une telle aimantation circonférentielle, dans le cas d'un fil spiralé à pas faible, grâce aux signaux caractérisant les deux extrémités de la fissure 22, ainsi qu'illustré figure 10.

Un filtrage adapté des signaux fournis par les capteurs permet également d'améliorer la détection des défauts. Ainsi un filtrage passe-bas permet de supprimer l'influence néfaste des éventuels défauts d'une couche intermédiaire, telle que la carcasse 13, qui ne serait pas totalement amagnétique ou démagnétisée. En effet de tels défauts qui se trouvent plus proches des capteurs génèrent dans ceux-ci des signaux de fréquence plus élevée que des défauts plus éloignés, du fait de l'aplatissement des déviations de lignes de flux de fuites qui augmente lorsque on s'éloigne du défaut.

Sur la base de cette dernière constatation, et pour limiter encore les éventuelles perturbations qui pourraient provenir, malgré la démagnétisation sélective décrite présentement, d'une telle couche intermédiaire légèrement magnétique, ou encore pour améliorer l'efficacité du contrôle dans le cas où l'aimantation rémanente de la zone intermédiaire est assez faible pour ne pas procéder à une démagnétisation sélective, mais où elle est suffisante pour affecter plus ou moins le contrôle, on éloignera légèrement les capteurs de la surface de cette couche, de 0,5 mm à quelques millimètres par exemple.

Selon un mode préférentiel de mesure et de traitement des signaux obtenus, on mesure au moins deux composantes du champ, soit par une mesure absolue soit par une mesure différentielle, et on traite le signal obtenu, représentatif de chaque composante du champ mesuré, par différenciation en fonction d'une ou plusieurs directions spatiales et on réalise des cartographies, représentatives des tronçons de canalisation, qui permettent par exemple par des méthodes connues de traitement d'image, de supprimer les signaux de faux défauts tels que ceux pouvant résulter des déjoints entre les fils de la voûte, ou de déterminer diverses caractéristiques des défauts permettant de les différencier et de les trier selon leur orientation, leur largeur ou longueur, etc.

Bien que les explications qui précédent aient été données essentiellement dans le cadre de l'application de l'invention au contrôle par l'intérieur des flexibles représentés figure 1, l'invention n'est pas limitée à une telle application. Le procédé et le dispositif de contrôle tel que définis dans les revendications s'appliquent également au contrôle de la voûte de pression de flexibles ayant une autre structure, par exemple dont la voûte est formée avec des fils présentant une section quelconque, auto-agrafable ou non, ou encore au contrôle des couches d'armure formées par des fils en matériau ferromagnétique, de section quelconque (plate, en "T", etc.), enroulés avec un pas relativement long, par exemple avec des fils inclinés à 45°, notamment dans le cas de flexibles comportant des nappes d'armures assurant également la fonction de résistance aux efforts de pression interne, une gaine de pression interne en matériau polymère et une carcasse interne similaire à celle des flexibles avec voûte de pression.

Quel que soit le type de flexible considéré, l'invention s'applique aussi lorsque une ou plusieurs couches intermédiaires, telles que la carcasse des flexibles décrits précédemment, est en matériau amagnétique ou légèrement magnétique, tel que aluminium ou acier inoxydable austénitique, ou en matériau magnétique tel que acier inoxydable ferritique.

L'invention s'applique également au contrôle par l'extérieur de produits de section sensiblement pleine, tels que les câbles d'ancrage cités au début de ce mémoire, ou des produit tubulaires considérés ci-dessus, par exemple pour l'inspection des nappes d'armure ferromagnétiques à travers une gaine extérieure en matériau polymère et éventuellement une ou plusieurs couches électro-isolantes telles que ruban adhésif, mousse d'isolation thermique, etc., ou pour l'inspection par l'extérieur de la voûte de pression ferromagnétique de flexibles dont les armures sont amagnétiques, en matériau composite à base de fibres de verre par exemple.

Dans de tels cas de contrôle effectué par l'extérieur sur des produits qui peuvent être très longs, on pourra utiliser un dispositif basé sur le même principe que celui décrit précédemment pour un contrôle par l'intérieur, en réalisant les différentes têtes ou modules sous une forme annulaire, adaptée pour encercler le produit, chaque tête ou module étant préférentiellement formé de deux coquilles pouvant s'écarter pour faciliter la mise en place sur le produit, transversalement à son axe. Ces têtes pourront être mises en oeuvre soit sous la forme de modules individuels introduits séparément en une suite d'opérations successives ( par transposition du procédé selon figures 3 et 4), soit sous la forme d'un dispositif de contrôle autonome unique, déplaçable dans la longueur de la canalisation, et constitué de plusieurs modules annulaires attelés les uns aux autres par des éléments de liaison (transposition du dispositif selon figure 15).

L'invention s'applique ainsi à tous produits allongés, même de très grande longueur, flexibles ou rigides, dans lesquels les moyens de contrôle ne peuvent pas être déplacé à proximité directe de la couche à contrôler et/ou dans lesquels les défauts à détecter sont éloignés de la surface sur laquelle les dits moyens de contrôle peuvent être déplacés.

Dans son principe fondamental, l'invention s'applique de manière générale à tout produit comportant au moins une couche en matériau ferromagnétique qui comprend une zone à contrôler, et présentant une surface accessible, la couche en matériau ferromagnétique étant contenue entre deux surfaces sensiblement parallèles à la dite surface accessible, et la zone à contrôler étant distante de la surface accessible et par ailleurs suffisamment éloignée de tout bord que pourrait présenter la couche en matériau magnétique, de manière à éviter les effets de bords. L'invention s'applique ainsi non seulement typiquement aux produits allongés, mais aussi aux produits plats, tels que par exemple des tôles de grande dimension, des réservoirs ou cuves, etc.

On notera que l'étendue de la surface de la dite zone à contrôler peut être ou bien voisine de la surface totale de la couche ferromagnétique (la différence de surface correspondant, à la limite, aux régions d'extrémité, non contrôlables à cause des effets de bords précités), ou bien inférieure à la surface de la couche ferromagnétique, par exemple dans le cas où il existe, entre deux zones à contrôler distinctes, une zone exclue du contrôle parce que présentant localement une courbure excessive.

Par ailleurs, chaque zone à contrôler peut être considérée comme délimitée par deux surfaces approximativement parallèles à une surface réglée moyenne qui peut être une surface plane, une surface cylindrique de révolution ou une portion de cylindre de révolution, ou encore un cylindre ou une partie de cylindre de courbure variant de façon progressive et relativement limitée.

Comme on l'aura compris, l'invention vise l'inspection de la dite zone à contrôler distante de la dite surface accessible, entre lesquelles la paroi comporte donc une zone intermédiaire dont la présence est à l'origine, compte tenu de son épaisseur et des propriétés des matériaux qui la constituent, d'une partie des problèmes que pose le contrôle magnétique de la dite zone à contrôler et que l'invention permet de résoudre. La dite zone intermédiaire peut comporter :
- une couche amagnétique plus ou moins épaisse, de forme quelconque, mais comprise entre deux surfaces parallèles à la surface accessible et, en conséquence, aux surfaces délimitant la couche en matériau magnétique, et/ou,
- une couche en matériau légèrement magnétique ou ferromagnétique, c'est à dire susceptible de conserver une aimantation rémanente après magnétisation, cette couche étant distincte de la couche ferromagnétique à contrôler, et/ou,
- une zone d'épaisseur plus ou moins importante comprise dans la couche ferromagnétique contenant la zone à contrôler, la dite zone à contrôler constituant la partie de la couche ferromagnétique la plus éloignée par rapport à la surface accessible (comme ce peut être le cas pour contrôler par exemple des tubes en acier épais où l'on souhaite détecter des défauts situés en profondeur).

## Revendications

1. Procédé de contrôle magnétique de flexibles de grande longueur, dont la paroi comporte au moins une couche (11) interne formée d'un fil spiralé en matériau ferromagnétique, selon lequel on magnétise la dite couche par un champ orienté parallèlement à la surface de la dite paroi, la magnétisation étant effectuée en déplaçant longitudinalement par rapport au dit flexible des moyens de magnétisation créant un champ d'aimantation localisée, de manière à générer dans la dite couche une aimantation rémanente (H), et la mesure est effectuée au défilement après la dite magnétisation, en la seule présence de la dite aimantation rémanente, en déplaçant le long de la paroi un détecteur (2) de champ magnétique et on mesure le champ magnétique au voisinage de la surface du flexible, des variations du champ mesuré le long de la paroi étant significatives de défauts (22) affectant la dite couche (11).

2. Procédé selon la revendication 1, **caractérisé en ce que**, avant de magnétiser la dite couche, on procède à une démagnétisation de la paroi.

3. Procédé selon l'une des revendications 1 ou 2, pour la détection de défauts dans un flexible dont la paroi comporte, entre la couche à contrôler et sa surface accessible, une couche intermédiaire (13) non totalement amagnétique, **caractérisé en ce que**, après la dite magnétisation, on procède à une démagnétisation sélective de la dite couche intermédiaire.

4. Procédé selon l'une des revendications 1 à 3, **caractérisé en ce que** on mesure plusieurs composantes (H_{N}, H_{T1}, H_{T2}) du champ, orientées dans des directions différentes.

5. Procédé selon la revendication 4, **caractérisé en ce que** on traite le signal représentatif de chaque composante du champ mesuré par différenciation en fonction d'une ou plusieurs directions spatiales et on en déduit une cartographie des défauts détectés représentative des caractéristiques géométriques des défauts.

6. Dispositif de contrôle magnétique de flexibles de grande longueur, dont la paroi (1) comporte au moins une couche (11) interne formée d'un fil spiralé en matériau ferromagnétique, comportant des moyens de magnétisation (30) agencés de manière à générer un champ d'aimantation localisé et adaptés pour générer dans la paroi (1) du flexible un champ magnétique (H) orienté parallèlement à sa surface accessible, et des moyens (45) de mesure du champ au voisinage de la dite surface, les moyens de magnétisation et les moyens de mesure étant adaptés pour être déplacés selon la direction longitudinale du flexible parallèlement à la dite surface, et les moyens de magnétisation et les moyens de mesure sont, lors de leur utilisation, éloignés l'un de l'autre d'une distance telle que le champ d'aimantation généré par les moyens de magnétisation n'est pas directement mesurable par les dits moyens de mesure, de façon à ne mesurer que le champ magnétique rémanent induit par les moyens de magnétisation.

7. Dispositif selon la revendication 6, **caractérisé en ce qu'**il comporte des moyens d'entraînement (32) pour déplacer alternativement et successivement les moyens de magnétisation et les moyens de mesure à la surface du flexible.

8. Dispositif selon la revendication 6, **caractérisé en ce que** les moyens de magnétisation (62) et les moyens de mesure (64) sont reliés entre eux et **en ce qu'**il comporte des moyens d'entraînement (61) pour les déplacer simultanément à la surface du flexible.

9. Dispositif selon la revendication 6, **caractérisé en ce que** les moyens de magnétisation (30, 62) comportent une source d'aimantation (36, 43) ayant un pôle nord et un pôle sud et des éléments souples (39) de conduction des lignes de flux magnétique adaptés sur les dits pôles pour être en contact avec la surface du flexible.

10. Dispositif selon la revendication 6, **caractérisé en ce que** les moyens de mesure comportent des capteurs (28, 29) disposés de manière à mesurer le champ magnétique dans plusieurs directions en chaque point de mesure.

11. Dispositif selon la revendication 6, **caractérisé en ce que** les moyens de mesure comportent, pour chaque point de mesure, un ensemble de deux capteurs (2', 2") superposés dans la direction perpendiculaire à la surface de la paroi.

12. Dispositif selon la revendication 8, **caractérisé en ce qu'**il comporte des moyens de démagnétisation situés en amont des moyens de magnétisation (62), de l'autre côté de ceux-ci par rapport aux moyens de mesure (64).

13. Dispositif selon la revendication 8, **caractérisé en ce qu'**il comporte des moyens de démagnétisation (63) situés entre les moyens de magnétisation (62) et les moyens de mesure (64).

## Patentansprüche

1. Verfahren zur magnetischen Prüfung von flexiblen Rohren großer Länge, deren Wandung wenigstens eine innere Schicht (11) aufweist, die von einem spiralig gewickelten Draht aus ferromagnetischem Material gebildet wird, nach welchem Verfahren man die genannte Schicht durch ein parallel zur Oberfläche der Wandung orientiertes Feld magnetisiert, wobei die Magnetisierung durchgeführt wird, indem man eine Magnetisierungseinrichtung, die ein lokales Magnetisierungsfeld erzeugt, relativ zu dem flexiblen Rohr in Längsrichtung verschiebt, so daß in der Schicht eine remanente Magnetisierung (H) erzeugt wird, und wobei die Messung beim Abwickeln nach der Magnetisierung nur in Anwesenheit der remanenten Magnetisierung durchgeführt wird, indem man einen Magnetfelddetektor (2) entlang der Wandung verschiebt und das Magnetfeld in der Nähe der Oberfläche des flexiblen Rohrs mißt, wobei Änderungen des entlang der Wandung gemessenen Feldes für Fehler (22) kennzeichnend sind, die die Schicht (11) beeinträchtigen.

2. Verfahren nach Anspruch 1, **dadurch gekennzeichnet, daß** man vor der Magnetisierung der Schicht eine Entmagnetisierung der Wandung durchführt.

3. Verfahren nach einem der Ansprüche 1 oder 2 zur Detektierung von Fehlern in einem flexiblen Rohr, dessen Wandung zwischen der zu prüfenden Schicht und der zugänglichen Oberfläche eine nicht vollständig unmagnetische Zwischenschicht (13) aufweist, **dadurch gekennzeichnet, daß** man nach der Magnetisierung eine selektive Entmagnetisierung der Zwischenschicht vornimmt.

4. Verfahren nach einem der Ansprüche 1 bis 3, **dadurch gekennzeichnet, daß** man mehrere Komponenten (H_{N}, H_{T1}, H_{T2}) des Feldes mißt, die in verschiedene Richtungen orientiert sind.

5. Verfahren nach Anspruch 4, **dadurch gekennzeichnet, daß** man das Signal, das für jede gemessene Komponente des Feldes kennzeichnend ist, durch Differenzieren nach einer oder mehreren räumlichen Richtungen verarbeitet und eine Kartographie der detektierten Fehler herleitet, die für die geometrischen Eigenschaften der Fehler repräsentativ ist.

6. Vorrichtung zur magnetischen Prüfung von flexiblen Rohren großer Länge, deren Wandung wenigstens eine innere Schicht (11) aufweist, die von einem spiralig gewickelten Draht aus ferromagnetischem Material gebildet wird, mit einer Magnetisierungseinrichtung (30), die so ausgebildet sind, daß sie ein lokales Magnetisierungsfeld erzeugen und die in der Wandung (1) des flexiblen Rohrs ein magnetisches Feld (8) erzeugen können, das parallel zu seiner zugänglichen Oberfläche orientiert ist, sowie mit eine Meßeinrichtung (45) zum Messen des Feldes in der Nähe der Oberfläche, wobei die Magnetisierungseinrichtung und die Meßeinrichtung so ausgebildet sind, daß sie in Längsrichtung des flexiblen Rohrs parallel zu der genannten Oberfläche verschiebbar sind, und wobei die Magnetisierungseinrichtung und die Meßeinrichtung bei ihrem Einsatz einen solchen Abstand voneinander haben, daß das von der Magnetisierungseinrichtung erzeugte Magnetisierungsfeld von der Meßeinrichtung nicht direkt meßbar ist, so daß nur das von der Magnetisierungseinrichtung induzierte remanente Magnetfeld gemessen wird.

7. Vorrichtung nach Anspruch 6, **dadurch gekennzeichnet, daß** sie eine Antriebseinrichtung (32) aufweist, um die Magnetisierungseinrichtung und die Meßeinrichtung an der Oberfläche des flexiblen Rohrs abwechselnd und sukzessiv zu verschieben.

8. Vorrichtung nach Anspruch 6, **dadurch gekennzeichnet, daß** die Magnetisierungseinrichtung (62) und die Meßeinrichtung (64) miteinander verbunden sind und daß eine Antriebseinrichtung (61) vorgesehen ist, um sie gleichzeitig an der Oberfläche des flexiblen Rohrs zu verschieben.

9. Vorrichtung nach Anspruch 6, **dadurch gekennzeichnet, daß** die Magnetisierungseinrichtung (30, 62) eine Magnetisierungsquelle mit einem Nordpol und einem Südpol aufweist sowie nachgiebige Elemente (39) zur Führung der magnetischen Flußlinien, die an den Polen angebracht sind, um mit der Oberfläche des flexiblen Rohrs in Kontakt zu treten.

10. Vorrichtung nach Anspruch 6, **dadurch gekennzeichnet, daß** die Meßeinrichtung Fühler (28, 29) besitzt, die so angeordnet sind, daß sie in jedem Meßpunkt das Magnetfeld in mehreren Richtungen messen.

11. Vorrichtung nach Anspruch 6, **dadurch gekennzeichnet, daß** die Meßeinrichtung für jeden Meßpunkt eine Anordnung aus zwei Fühlern (2', 2") aufweist, die in der zur Oberfläche der Wandung senkrechten Richtung übereinander liegen.

12. Vorrichtung nach Anspruch 8, **dadurch gekennzeichnet, daß** sie eine Entmagnetisierungseinrichtung aufweist, die stromaufwärts der Magnetisierungseinrichtung (62) auf der anderen Seite derselben relativ zu der Meßeinrichtung (64) liegt.

13. Vorrichtung nach Anspruch 8, **dadurch gekennzeichnet, daß** sie eine Entmagnetisierungseinrichtung (63) aufweist, die zwischen der Magnetisierungseinrichtung (62) und der Meßeinrichtung (64) liegt.

## Claims

1. Procedure for the magnetic inspection of long flexible pipes, the wall of which includes at least one internal layer (11) formed by a spirally wound wire made of ferromagnetic material, in which the said layer is magnetized by a field oriented parallel to the surface of the said wall, the magnetizing step being carried out by moving, longitudinally with respect to the said flexible pipe, magnetizing means which create a localized magnetization field, so as to generate a remanent magnetization (H) in the said layer, and the measurement is carried out on the run after the said magnetizing step, just in the presence of the said remanent magnetization, by moving a magnetic-field detector (2) along the wall, and the magnetic field near the surface of the flexible pipe is measured, variations in the measured field along the wall being indicative of faults (22) affecting the said layer (11).

2. Procedure according to Claim 1, **characterized in that** the wall is demagnetized before the said layer is magnetized.

3. Procedure according to either of Claims 1 and 2, for the detection of faults in a flexible pipe whose wall includes, between the layer to be inspected and its accessible surface, an intermediate layer (13) which is not completely non-magnetic, **characterized in that** the said intermediate layer is selectively demagnetized after the said magnetizing step.

4. Procedure according to one of, Claims 1 to 3, **characterized in that** several components (H_{N}, H_{T1}, H_{T2}) of the field, which are oriented in different directions, are measured.

5. Procedure according to Claim 4, **characterized in that** the signal representative of each component of the measured field is processed by differentiation as a function of one or more spatial direction and a mapping of the faults detected, which is representative of the geometrical characteristics of the faults, is calculated therefrom.

6. Device for the magnetic inspection of long flexible pipes, the wall (1) of which includes at least one internal layer (11) formed by a spirally wound wire of ferromagnetic material, which includes magnetizing means (30) which are arranged so as to generate a localized magnetization field and are suitable for generating, in the wall (1) of the flexible pipe, a magnetic field (H) oriented parallel to its accessible surface, and means (45) for measuring the field near the said surface, the magnetizing means and the measuring means being suitable for being moved along the longitudinal direction of the flexible pipe parallel to the said surface, and the magnetizing means and the measuring means are, while they are being used, separated from each other by a distance such that the magnetization field generated by the magnetizing means cannot be directly measured by the said measuring means, so as to measure only the remanent magnetic field induced by the magnetizing means.

7. Device according to Claim 6, **characterized in that** it includes driving means (32) for alternately and successively moving the magnetizing means and the measuring means at the surface of the flexible pipe.

8. Device according to Claim 6, **characterized in that** the magnetizing means (62) and the measuring means (64) are connected together and **in that** it includes driving means (61) for moving them simultaneously to the surface of the flexible pipe.

9. Device according to Claim 6, **characterized in that** the magnetizing means (30, 62) include a magnetization source (36, 43) having a north pole and a south pole and flexible elements (39) for conducting the lines of magnetic flux, these flexible elements being fitted to the said poles in order to be in contact with the surface of the flexible pipe.

10. Device according to Claim 6, **characterized in that** the measuring means include sensors (28, 29) arranged so as to measure the magnetic field in several directions at each measurement point.

11. Device according to Claim 6, **characterized in that** the measuring means include, for each measurement point, a set of two sensors (2', 2") superimposed in the direction perpendicular to the surface of the wall.

12. Device according to Claim 8, **characterized in that** it includes demagnetizing means lying upstream of the magnetizing means (62), on the other side from the latter with respect to the measuring means (64).

13. Device according to Claim 8, **characterized in that** it includes demagnetizing means (63) lying between the magnetizing means (62) and the measuring means (64).
